Europäisches Patentamt

European Patent Office

Office européen des brevets

(19)

(11) Numéro de publication : **0 077 259**
**B1**

(12) **FASCICULE DE BREVET EUROPÉEN**

(45) Date de publication du fascicule du brevet :
**10.09.86**

(21) Numéro de dépôt : **82401830.3**

(22) Date de dépôt : **06.10.82**

(51) Int. Cl.⁴ : **G 01 B 11/08, G 01 M 11/00**

(54) **Procédé et dispositif de mesure du diamètre effectif du mode guidé dans une fibre optique monomode.**

(30) Priorité : **12.10.81 FR 8119162**

(43) Date de publication de la demande :
**20.04.83 Bulletin 83/16**

(45) Mention de la délivrance du brevet :
**10.09.86 Bulletin 86/37**

(84) Etats contractants désignés :
**BE DE GB IT NL SE**

(56) Documents cités :
**EP-A- 0 029 195**
**REVIEW OF SCIENTIFIC INSTRUMENTS, vol. 53, no. 2, février 1982, American Institute of Physics, New York (US), J. STONE et al.: "Measurement set for optical fiber loss spectra", pages 197-201**
**"Fiber Optics. Principles and Applications", par N.S. Kapany. Academic Press. New York 1967, pages 160-163**

(73) Titulaire : **Alard, Francis**
**La Rose des Vents Ploumilliau**
**F-22300 Lannion (FR)**

**Jeunhomme, Luc**
**9, Square Monge**
**F-78330 Fontenay le Fleury (FR)**

(72) Inventeur : **Alard, Francis**
**La Rose des Vents Ploumilliau**
**F-22300 Lannion (FR)**
Inventeur : **Jeunhomme, Luc**
**9, Square Monge**
**F-78330 Fontenay le Fleury (FR)**

(74) Mandataire : **Mongrédien, André et al**
**c/o BREVATOME 25, rue de Ponthieu**
**F-75008 Paris (FR)**

## Description

La présente invention concerne un procédé de mesure du diamètre effectif du mode guidé dans une fibre optique monomode. Elle s'applique notamment à la détermination de caractéristiques des fibres optiques monomodes et donc aux télécommunications optiques.

On sait en effet que ledit diamètre effectif, noté 2 $w_o$, régit les pertes résultant de microcourbures et de connexions, pour les fibres optiques monomodes, et que la connaissance de ce diamètre effectif en fonction de la longueur d'onde, permet, pour une fibre optique monomode, de déterminer le diamètre de cœur et la différence d'indices optiques de la fibre à échelon (ou saut) d'indice équivalente et donc les pertes par courbure et la bande passante de ladite fibre monomode.

On connaît des méthodes de mesure du profil d'indice ou du diagramme de rayonnement en champ lointain qui permettent de calculer les paramètres de la fibre à échelon d'indice équivalente à une fibre optique monomode et d'en déduire le diamètre effectif 2 $w_o$ de cette dernière.

Les méthodes de mesure du profil d'indice sont très difficiles à mettre en œuvre à cause du très petit diamètre du cœur d'une fibre optique monomode qui, en général, est inférieur à 10 μm. En outre, les paramètres de la fibre équivalente sont alors obtenus indirectement par un calcul et la valeur du diamètre effectif 2 $w_o$, elle-même obtenue par un nouveau calcul, est très peu précise.

Les méthodes de mesure du diagramme de rayonnement en champ lointain nécessitent, quant à elles, des sources lumineuses très brillantes car elles impliquent la mesure de lobes secondaires qui ont une intensité relative très faible. Les sources utilisables sont les lasers du type à krypton, à argon, à hélium-néon ou à YAG-ND$^{3+}$ et imposent donc à la fibre étudiée d'être monomode à leur longueur d'onde d'émission, qui va de 0,5 à 0,8 μm pour les premiers et qui vaut 1,06 μm pour le laser à YAG-ND$^{3+}$, ce qui n'est pas forcément le cas.

Les méthodes précédemment mentionnées ne permettent qu'une détermination indirecte du diamètre effectif 2 $w_o$. Une méthode de mesure directe de ce dernier est donnée dans un article de C.A. MILLAR, publié dans la revue Electronics Letters, vol. 17, n° 13, juin 1981 — pp. 458-460, mais cette méthode nécessite un banc de mesure spécial pour sa mise en œuvre, ce qui impose donc une manipulation supplémentaire de la fibre étudiée par rapport aux autres mesures que l'on désire effectuer sur elle. Cela est d'ailleurs également vrai pour les autres méthodes de détermination indirecte mentionnées ci-dessus.

La présente invention a pour but un procédé de mesure du diamètre effectif du mode guidé dans une fibre optique monomode, qui ne présente pas les inconvénients des méthodes précédentes, notamment en ce qu'il permet de mesurer directement ledit diamètre effectif et d'effectuer la mesure de celui-ci sur un montage identique à celui qui est utilisé pour les mesures d'atténuation, évitant ainsi une manipulation supplémentaire, longue et coûteuse, de la fibre étudiée.

De façon précise, la présente invention a pour objet un procédé de mesure du diamètre effectif 2 $w_o$ du mode guidé dans une fibre optique monomode, à une longueur d'onde λ, ladite fibre optique ayant une face d'entrée, caractérisé en ce qu'il consiste :

— à diriger sur ladite face d'entrée un faisceau de lumière incohérente de longueur d'onde λ, incident sur ladite face d'entrée selon un cône de demi-angle au sommet φ, par l'intermédiaire de moyens optiques permettant de faire varier le demi-angle au sommet φ, ledit faisceau ayant une section droite sur la face d'entrée, supérieure à celle du cœur de la fibre optique, ayant une intensité qui présente une symétrie de révolution autour de l'axe dudit cône et étant tel que la puissance lumineuse transportée par ce faisceau dans un angle solide infiniment petit dΩ autour d'une direction faisant un angle θ avec ledit axe soit égale à $P_o\cos\theta\, d\Omega$, $P_o$ étant un facteur de proportionnalité, la fibre optique étant disposée selon ledit axe,

— à effectuer une pluralité de mesures de la puissance lumineuse Pφ transmise par cette fibre optique, chaque mesure étant effectuée avec une valeur différente du demi-angle au sommet, déterminée par les moyens optiques, et

— à déterminer le diamètre effectif 2 $w_o$ à l'aide des mesures et de la formule suivante, dans laquelle $P_\infty$ est une quantité égale à $(P_o\lambda^2)/A$, A étant l'aire de la section droite du faisceau incident sur ladite face d'entrée :

$$P(\phi) = P_\infty \left[1 - \exp(-2(\pi^2 w_o^2/\lambda^2)\sin^2\phi)\right]$$

Selon une caractéristique particulière du procédé objet de l'invention, ledit faisceau lumineux est obtenu à l'aide d'une source de rayonnement incohérent de longueur d'onde λ, dont on forme l'image sur ladite face d'entrée, grâce aux moyens optiques, l'image de la source ayant une taille supérieure au diamètre de cœur de la fibre optique, ladite source ayant un diagramme de rayonnement qui présente une symétrie de révolution autour d'un axe formant l'axe dudit cône et étant telle que la puissance lumineuse émise par elle dans un angle solide infiniment petit $d\Omega_s$ autour d'une direction faisant un angle $\theta_s$ avec ledit axe soit proportionnelle à $\cos\theta_s\, d\Omega_s$, lesdits moyens optiques conservant la loi angulaire du rayonnement.

Selon une autre caractéristique particulière, la source comprend une lampe quartz-halogène à filament de tungstène, munie de moyens de sélection de longueur d'onde, de façon à obtenir le rayonnement de longueur d'onde λ.

Selon une autre caractéristique particulière, les moyens optiques consistent en un objectif à ouverture variable. On peut alors faire varier le demi-angle au sommet $\phi$ à l'aide de ladite ouverture variable, de façon à obtenir plusieurs couples ($\phi$, $P(\phi)$), et déterminer, à l'aide desdits couples et de ladite formule, le diamètre effectif $2 w_o$ par la méthode des moindres carrés.

Selon une autre caractéristique particulière, la taille de l'image de la source est au moins cinq fois plus grande que le diamètre de cœur de la fibre optique.

L'invention permet bien entendu de déterminer ledit diamètre effectif $2 w_o$ du mode guidé à différentes longueurs d'onde, en réalisant une mesure de $w_o$ à chacune de ces longueurs d'onde. On peut alors, comme indiqué plus haut, déterminer le diamètre de cœur et la différence des indices optiques de la fibre à saut d'indice équivalente. Toute longueur d'onde à laquelle on effectue une mesure du diamètre effectif doit, bien entendu, être supérieure à la longueur d'onde de coupure du deuxième mode.

L'invention sera mieux comprise à la lecture de la description qui suit d'un mode de réalisation particulier donné à titre indicatif et non limitatif, en référence aux dessins annexés sur lesquels :

la figure 1 est une vue schématique d'un mode de réalisation particulier d'un dispositif pour la mise en œuvre du procédé objet de l'invention ;

la figure 2 est une vue schématique d'un faisceau lumineux émis par une source lumineuse utilisée dans le dispositif représenté sur la figure 1, et

la figure 3 est une vue schématique d'un faisceau lumineux incident sur une fibre optique monomode que l'on désire étudier à l'aide du dispositif de la figure 1.

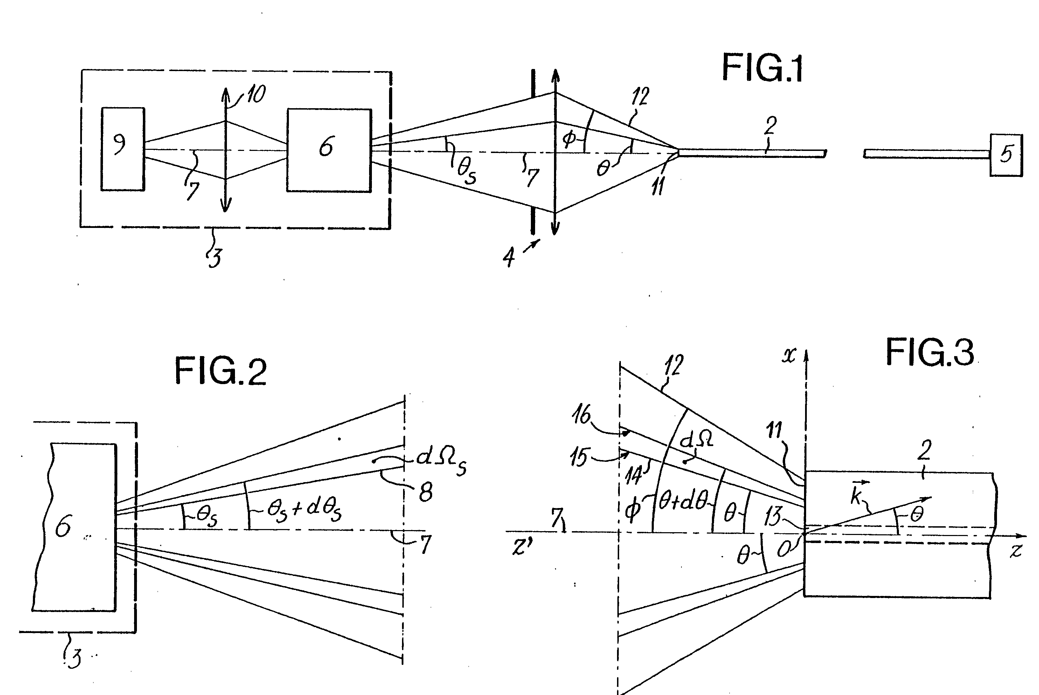

Sur la figure 1, on a représenté schématiquement un dispositif prévu pour déterminer le diamètre effectif $2 w_o$ du mode guidé dans une fibre optique 2 monomode, à une longueur d'onde $\lambda$. Ce dispositif comprend essentiellement une source 3 de rayonnement incohérent de longueur d'onde $\lambda$, des moyens optiques 4 et des moyens 5 de mesure de puissance lumineuse.

Si la source 3 émet un rayonnement ayant une largeur spectrale supérieure à 5 % de la longueur d'onde centrale d'émission, il est préférable de lui adjoindre des moyens 6 de sélection de longueur d'onde, de façon à obtenir le rayonnement de longueur d'onde $\lambda$ souhaité. Par ailleurs, la source 3 est prévue pour avoir un diagramme de rayonnement qui présente une symétrie de révolution autour d'un axe 7 et cette source 3 est également prévue pour que la puissance lumineuse émise par elle dans un angle solide infiniment petit $d\Omega_s$ (figure 2) autour d'une direction 8 faisant l'angle $\theta_s$ avec ledit axe 7 soit proportionnelle à $\cos\theta_s \, d\Omega_s$ pour tout angle $\theta_s$ au plus égal à un angle $\theta_o$ lui-même au plus égal à 90°.

Ainsi peut-on réaliser la source 3 à l'aide d'une lampe 9 quartz-halogène à filament de tungstène associée auxdits moyens 6 de sélection pouvant consister en un monochromateur (ou un filtre de longueur d'onde). La lampe 9 envoie la lumière qu'elle émet sur le monochromateur 6 par l'intermédiaire d'une optique 10. L'axe 7 de révolution est normal à la surface émettrice de la lampe 9. Le monochromateur 6 a par exemple une ouverture de l'ordre de f/3 à f/4.

Les moyens optiques 4 sont prévus pour former l'image de la source 3 sur la face d'entrée 11 de la fibre optique 2 et sont choisis pour conserver la loi angulaire du rayonnement de la source 3 à un facteur K près, c'est-à-dire transformer un rayon lumineux incident sous un angle $\theta_s$ par rapport à l'axe 7 en un rayon lumineux faisant un angle $\theta = K\theta_s$ par rapport à cet axe 7. Les moyens optiques 4 sont également choisis pour permettre de faire varier, entre les valeurs 0 et $\theta_M$, le demi-angle au sommet $\phi$ d'un cône 12 de révolution ayant pour axe l'axe 7 et formé par ledit rayonnement lorsqu'il tombe sur la face d'entrée 11 de la fibre optique 2, $\theta_M$ étant au plus égal à $K\theta_o$.

Les moyens optiques 4 consistent par exemple en un objectif à ouverture variable, cette ouverture pouvant par exemple varier entre f/1 à f/22. Les variations de cette ouverture entraînent celles du demi-angle au sommet $\phi$. L'objectif 4 est par exemple du type de ceux que l'on rencontre dans les appareils photographiques ou les caméras. Ledit facteur K est le facteur de grandissement de l'objectif 4.

La fibre optique 2 est disposée selon ledit axe 7 de révolution et interposée entre l'objectif 4 et les moyens 5 de mesure prévus pour mesurer la puissance lumineuse $P(\phi)$ transmise par la fibre optique 2 lorsque celle-ci est éclairée par la source 3. Ces moyens 5 de mesure comprennent par exemple un détecteur au germanium refroidi ou une photodiode.

La source 3 et l'objectif 4 sont disposés de façon que l'image de la source 3 sur la face d'entrée 11 de la fibre optique 2 ait une taille beaucoup plus grande (par exemple cinq fois) que le diamètre du cœur 13 de la fibre optique 2 (figure 3) ou, en d'autres termes, de façon que le faisceau lumineux provenant de la source 3 et tombant sur la face d'entrée 11 de la fibre optique 2 ait une section droite A, sur ladite face d'entrée 11, très supérieure à celle du cœur 13.

Les hypothèses faites plus haut sur les propriétés de la source 3, quant à son diagramme de rayonnement et la puissance lumineuse qu'elle émet, résultent de propriétés identiques de la lampe 9 quartz-halogène et impliquent également des propriétés analogues pour le faisceau lumineux tombant sur la face d'entrée 11 de la fibre optique 2, du fait des propriétés des moyens optiques 4 mentionnées plus haut : l'intensité dudit faisceau présente une symétrie de révolution d'axe ledit axe 7 (axe du cône 12 de demi-angle au sommet $\phi$) et ce faisceau est tel que la puissance lumineuse qu'il transporte dans un angle solide infiniment petit $d\Omega$ (figure 3) autour d'une direction 14 faisant un angle $\theta$ avec ledit axe 7 soit proportionnelle à $\cos\theta \, d\Omega$.

La figure 3 permet de préciser ce qu'on entend par angle solide $d\Omega$ : il s'agit de l'angle solide correspondant au volume compris entre deux cônes de révolution 15 et 16 ayant pour axe l'axe 7 et de

3

demi-angles au sommet respectifs $\theta$ et $\theta + d\theta$. L'angle solide $d\Omega_s$ (figure 2) se définit de façon analogue.

Selon le procédé de l'invention, une fois la longueur d'onde $\lambda$ de mesure choisie, on mesure la puissance lumineuse $P(\phi)$ transmise par la fibre optique 2, en fonction du demi-angle au sommet $\phi$ et l'on détermine le diamètre effectif $2 w_o$ à l'aide de la formule suivante, formule qui sera établie par la suite et dans laquelle $P_\infty$ est une quantité indépendante du demi-angle au sommet $\phi$ :

$$P(\phi) = P_\infty \, [1 - \exp(- 2( \, \pi^2 w_o^2/\lambda^2) \, \sin^2\phi)] \tag{1}$$

En mesurant la puissance lumineuse $P(\phi)$ pour différentes valeurs de $\phi$, obtenues en changeant l'ouverture de l'objectif 4, on peut calculer le diamètre effectif $2 w_o$ à la longueur d'onde $\lambda$, par exemple à l'aide de la méthode des moindres carrés appliquée à la formule (1).

Avec le dispositif décrit, on peut réaliser une mesure d'atténuation spectrale de la fibre optique 2, avec une ouverture de l'objectif 4 fixée (par exemple la plus grande des ouvertures réalisables), puis, sans avoir à remanipuler la fibre optique 2, ce qui représente un avantage par rapport à l'art antérieur, on peut relever la puissance lumineuse $P(\phi)$ pour différentes valeurs de $\phi$ et pour chaque longueur d'onde $\lambda$ souhaitée, de façon à déterminer le diamètre effectif $2 w_o$ correspondant à ces longueurs d'onde.

La formule (1) peut être établie de la manière suivante :

on désigne par z'z (figure 3) l'axe de la fibre optique 2, cet axe étant d'ailleurs confondu avec ledit axe 7 de révolution. L'axe z'z rencontre la face d'entrée 11 de la fibre optique 2 en un point 0. On définit deux axes Ox et Oy (Oy n'étant pas représenté) perpendiculaires, dans le plan de la face d'entrée 11.

Une onde plane incidente sur cette face d'entrée 11 et de vecteur d'onde K dans le plan xOz et incliné d'un angle $\theta$ par rapport à l'axe z'z a pour amplitude normalisée sur cette face d'entrée

$$E_\theta(x) = A^{-1/2} \exp(- ikx \sin\theta)$$

où A est l'aire de la section droite du faisceau incident sur la face d'entrée 11, k étant égal à $2\pi/\lambda$.

L'amplitude du mode fondamental guidé dans la fibre optique 2, sur la face d'entrée, peut être représentée par une fonction gaussienne de la forme $\exp(- r^2/w_o^2)$, $w_o$ étant le rayon à $e^{-2}$ en intensité relative de l'onde gaussienne qui fournit le meilleur rendement d'excitation du mode guidé et r étant égal à $(x^2 + y^2)^{1/2}$.

Le rendement d'excitation $\rho_i(\theta)$ du mode fondamental par l'onde plane incidente précédente est égal à $|\hat{\rho}_i(\theta)|$ avec :

$$\hat{\rho}_i(\theta) = w_o^{-1} 2^{1/2} (\pi A)^{-1/2} \iint \exp(- r^2/w_o^2) \exp(- ikx \sin\theta) \, dxdy$$

où $w_o^{-1} 2^{1/2} (\pi A)^{-1/2}$ est un facteur de normalisation. L'onde plane étant beaucoup plus étendue que le mode, l'aire A est très supérieure à $\pi w_o^2$ et l'on intègre sur tout le plan xOy, en tenant compte du fait que $r^2$ peut s'écrire $x^2 + y^2$ :

$$\hat{\rho}_i(\theta) = w_o^{-1} 2^{1/2} (\pi A)^{-1/2} \int_{-\infty}^{+\infty} \exp(- y^2/w_o^2) dy \int_{-\infty}^{+\infty} \exp(- x^2/w_o^2 - ikx \sin\theta) \, dx$$

En posant : $\sin u = 2(kw_o)^{-1} = \lambda(\pi w_o)^{-1}$, on obtient

$$\hat{\rho}_i(\theta) = w_o(2\pi/A)^{1/2} \exp(- \sin^2\theta/\sin^2 u)$$

Donc

$$\rho_i(\theta) = |\hat{\rho}_i(\theta)|^2 = 2\pi w_o^2/A \, \exp(- 2 \sin^2\theta/\sin^2 u)$$

Ce rendement $\rho_i(\theta)$ est également celui qui correspond à une onde plane quelconque, incidente sur la face 11 et dont le vecteur d'onde a pour module k et est incliné d'un angle $\theta$ par rapport à l'axe z'z, du fait des propriétés dudit faisceau incident rappelées ci-dessous.

La puissance $P(\phi)$ correspond à une excitation globale de la fibre optique par le faisceau de lumière incohérente éclairant uniformément la surface A très supérieure à $\pi w_o^2$, ce faisceau ayant une intensité qui présente une symétrie de révolution autour de l'axe 7 et étant tel que la puissance lumineuse dP transportée par ce faisceau dans un angle solide $d\Omega$ autour d'une direction faisant l'angle $\theta$ avec l'axe 7 ($0 \leqslant \theta \leqslant \phi$) soit égale à $P_o \cos\theta \, d\Omega$ où $p_o$ est un facteur de proportionnalité. Cette puissance $P(\phi)$ vaut donc :

$$P(\phi) = \int_o^\phi \rho_i(\theta) dP = \int_o^\phi \rho_i(\theta) P_o \cos\theta \, d\Omega$$

$$= P_o \int_o^\phi 2\pi \rho_i(\theta) \sin\theta \cos\theta \, d\theta$$

$$= P_o \lambda^2/A \, [1 - \exp(- 2 \sin^2\phi/\sin^2 u)]$$

ce qui donne bien la formule (1) en posant $P_\infty = P_o \lambda^2/A$ et en remplaçant $\sin u$ par sa valeur $\lambda(\pi w_o)^{-1}$.

**0 077 259**

## Revendications

1. Procédé de mesure du diamètre effectif $2 w_o$ du mode guidé dans une fibre optique (2) monomode, à une longueur d'onde $\lambda$, ladite fibre optique (2) ayant une face d'entrée (11), caractérisé en ce qu'il consiste :

à diriger sur ladite face d'entrée (11) un faisceau de lumière incohérente de longueur d'onde $\lambda$, incident sur ladite face d'entrée (11) selon un cône (12) de demi-angle au sommet $\phi$, par l'intermédiaire de moyens optiques (4) permettant de faire varier le demi-angle au sommet $\phi$, ledit faisceau ayant une section droite sur la face d'entrée (11), supérieure à celle du cœur de la fibre optique (2), ayant une intensité qui présente une symétrie de révolution autour de l'axe (7) dudit cône (12) et étant tel que la puissance lumineuse transportée par ce faisceau dans un angle solide infiniment petit $d\Omega$ autour d'une direction (14) faisant un angle $\theta$ avec ledit axe (7) soit égale à $P_o \cos\theta \, d\Omega$, $P_o$ étant un facteur de proportionnalité, la fibre optique (2) étant disposée selon ledit axe (7),

à effectuer une pluralité de mesures de la puissance lumineuse $P(\phi)$ transmise par cette fibre optique (2), chaque mesure étant effectuée avec une valeur différente du demi-angle au sommet $\phi$, déterminée par les moyens optiques, et

à déterminer le diamètre effectif $2 w_o$ à l'aide des mesures et de la formule suivante, dans laquelle $P_\infty$ est une quantité égale à $(P_o\lambda^2)/A$, A étant l'aire de la section droite du faisceau incident sur ladite face d'entrée :

$$P(\phi) = P_\infty \left[1 - \exp\left(-2(\pi^2 w_o^2/\lambda^2) \sin^2\phi\right)\right]$$

2. Procédé selon la revendication 1, caractérisé en ce que ledit faisceau lumineux est obtenu à l'aide d'une source (3) de rayonnement incohérent de longueur d'onde $\lambda$, dont on forme l'image sur ladite face d'entrée (11), grâce aux moyens optiques (4), l'image de la source (3) ayant une taille supérieure au diamètre de cœur de la fibre optique (2), ladite source (3) ayant un diagramme de rayonnement qui présente une symétrie de révolution autour d'un axe formant l'axe (7) dudit cône (12) et étant telle que la puissance lumineuse émise par elle dans un angle solide infiniment petit $d\Omega_s$ autour d'une direction (8) faisant un angle $\theta_s$ avec ledit axe (7) soit proportionnelle à $\cos\theta_s \, d\Omega_s$, lesdits moyens optiques (4) conservant la loi angulaire du rayonnement.

3. Procédé selon la revendication 2, caractérisé en ce que la source (3) comprend une lampe (9) quartz-halogène à filament de tungstène, munie de moyens (6) de sélection de longueur d'onde, de façon à obtenir le rayonnement de longueur d'onde $\lambda$.

4. Procédé selon l'une quelconque des revendications 2 et 3, caractérisé en ce que les moyens optiques (4) consistent en un objectif à ouverture variable.

5. Procédé selon la revendication 4, caractérisé en ce que l'on fait varier le demi-angle au sommet $\phi$ à l'aide de ladite ouverture variable, de façon à obtenir plusieurs couples $(\phi, P(\phi))$, et que l'on détermine, à l'aide desdits couples et de ladite formule, le diamètre effectif $2 w_o$ par la méthode des moindres carrés.

6. Procédé selon l'une quelconque des revendications 2 à 5, caractérisé en ce que la taille de l'image de la source (3) est au moins cinq fois plus grande que le diamètre de cœur de la fibre optique (2).


## Claims

1. Process for the measurement of the effective diameter $2 w_o$ of the mode guided in a monomode optical fibre (2), at a wavelength $\lambda$, the said optical fibre (2) having an entrance face (11), characterized in that the said process comprises the steps of :

directing to the said entrance face (11) a beam of incoherent light of wavelength $\lambda$, incident on the said entrance face (11) in the form of a cone (12) of semi-vertical angle $\phi$, by optical means (4) permitting variation of the semi-vertical angle $\phi$, the said beam having a cross-section perpendicular to the entrance face (11) which is greater than that of the core of the optical fibre (2), having an intensity which exhibits symmetry of revolution about the axis (7) of the said cone (12) and being such that the luminous power transmitted by this beam in an infinitely small solid angle $d\Omega$ about a direction (14) making an angle $\theta$ with the said axis (7) is equal to $P_o \cos\theta \, d\Omega$, $P_o$ being a proportionality factor, the optical fibre (2) being disposed along the said axis (7),

carrying out a plurality of measurements of the luminous power $P(\phi)$ transmitted by this optical fibre (2), each measurement being carried out with a different value of the semi-vertical angle $\phi$, which is determined by the optical means, and

determining the effective diameter $2 w_o$ by means of the measurements and of the following formula, in which $P_\infty$ is a quantity equal to $(P_o\lambda^2)/A$, A being the area of the cross-section of the beam incident on the said entrance face :

$$P(\phi) = P_\infty \left[1 - \exp\left(-2(\pi^2 w_o^2/\lambda^2) \sin^2\phi\right)\right]$$

2. Process according to Claim 1, characterized in that the said light beam is obtained by means of a

5

source (3) of incoherent radiation of wavelength λ, the image of which is formed on the said entrance face (11), by virtue of the optical means (4), the image of the source (3) having a size greater than the diameter of the core of the optical fibre (2), the said source (3) having a radiation diagram which exhibits symmetry of revolution about an axis forming the axis (7) of the said cone (12) and being such that the luminous power emitted by it in an infinitely small solid angle $d\Omega_s$ about a direction (8) making an angle $\theta_s$ with the said axis (7) is proportional to $\cos\theta_s \, d\Omega_s$, the said optical means (4) maintaining the angular law of the radiation.

3. Process according to Claim 2, characterized in that the source (3) comprises a quartz halogen lamp (9) with a tungsten filament, which lamp is provided with wavelength selection means (6), in such a manner as to obtain the radiation of wavelength λ.

4. Process according to either one of Claims 2 and 3, characterized in that the optical means (4) comprise an objective of variable aperture.

5. Process according to Claim 4, characterized in that the semi-vertical angle φ is caused to vary by means of the said variable aperture, in such a manner as to obtain a plurality of pairs (φ, P(φ)), and in that the effective diameter 2 $w_o$ is determined, by means of the said pairs and of the said formula, by the method of least squares.

6. Process according to any one of Claims 2 to 5, characterized in that the size of the image of the source (3) is at least five times greater than the diameter of the core of the optical fibre (2).

**Patentansprüche**

1. Verfahren zum Messen des effektiven Durchmessers 2 $w_o$ des Leitmodus in einer monomoden optischen Faser (2) bei einer Wellenlänge λ, wobei die optische Faser (2) eine Eintrittseite (11) aufweist, dadurch gekennzeichnet, daß es darin besteht :

ein inkohärentes Lichtbündel der Wellenlänge λ auf die Eintrittseite (11) zu richten, welches auf die Eintrittseite (11) mit einem Konus (12) mit dem halben Öffnungswinkel φ mittels optischer Mittel (4) einfällt, die eine Änderung des halben Öffnungswinkel φ ermöglichen, wobei das Bündel auf der Eintrittseite (11) einen größeren Querschnitt als der Kern der optischen Faser (2) und eine um die Achse (7) des Konus (12) rotationssymmetrische Intensität aufweist und derart ist, daß die von diesem Bündel in einem unendlich kleinen Raumwinkel um eine Richtung (14), die mit der Achse (7) einen Winkel θ einschließt, übertragene Lichtstärke gleich $P_o \cos\theta \, d\Omega$ ist, wobei $P_o$ ein Proportionalitätsfaktor und die optische Faser (2) längs dieser Achse (7) angeordnet ist,

eine Vielzahl von Messungen der von dieser optischen Faser (2) übertragenen Lichtstärke P(φ) durchzuführen, wobei jede Messung bei einem unterschiedlichen Wert des halben Öffnungswinkels φ, der durch die optischen Mittel bestimmt ist, durchgeführt wird, und

den effektiven Durchmesser 2 $w_o$ mit Hilfe der Messungen und der folgenden Formel durchzuführen, in der $P_x$ eine Größe ist, die gleich $(P_o\lambda^2)/A$ ist, mit A dem Querschnitt des auf die Eintrittseite einfallenden Bündels :

$$P(\phi) = P_x \, [1 - \exp(- 2(\pi^2 w_o^2/\lambda^2) \sin^2\phi)]$$

2. Verfahren nach Anspruch 1, dadurch gekennzeichnet, daß das Lichtbündel mit Hilfe einer inkohärenten Strahlungsquelle (3) mit der Wellenlänge λ erhalten wird, von der man ein Bild mit Hilfe der optischen Mittel (4) auf der Eintrittseite (11) bildet, wobei das Bild der Quelle (3) in Bezug auf den Kerndurchmesser der optischen Faser (2) eine größere Größe aufweist, die Quelle (3) ein Strahlungsdiagramm hat, welches eine Rotationssymmetrie um eine Achse aufweist, die die Achse (7) des Konus (12) bildet, und derart ist, daß die von ihr in einem unendlich kleinen Raumwinkel $d\Omega_s$ um eine Richtung (8), die mit der Achse (7) einen Winkel $\theta_s$ bildet, übertragene Lichtstärke proportional zu $\cos\theta_s \, d\Omega_s$ ist, wobei die optischen Mittel (4) das Winkelstrahlungsgesetz erfüllen.

3. Verfahren nach Anspruch 2, dadurch gekennzeichnet, daß die Quelle (3) eine Quarzhalogenlampe (9) mit einem Wolframglühfaden umfaßt, und die Quelle mit Mitteln (6) zum Auswählen der Wellenlänge versehen ist, damit die Strahlung mit der Wellenlänge λ erhalten wird.

4. Verfahren nach Anspruch 2 oder 3, dadurch gekennzeichnet, daß die optischen Mittel (4) aus einem Objektiv mit veränderbarer Öffnung bestehen.

5. Verfahren nach Anspruch 4, dadurch gekennzeichnet, daß man den halben Öffnungswinkel φ mit Hilfe der veränderbaren Öffnung derart ändert, daß man mehrere Paare (φ, P(φ)) erhält, und daß man mit Hilfe der Paare und der Formel den effektiven Durchmesser 2 $w_o$ nach dem Verfahren der kleinsten Quadrate bestimmt.

6. Verfahren nach einem der Ansprüche 2 bis 5, dadurch gekennzeichnet, daß die Größe des Bildes der Quelle (3) wenigstens fünfmal größer als der Kerndurchmesser der optischen Faser (2) ist.

FIG.1

FIG.2

FIG.3

0 077 259